# EUROPEAN PATENT SPECIFICATION

(11) **EP 4 694 676 B1**
(45) Date of publication and mention of the grant of the patent: **19.08.2026**
(21) Application number: 24715210.1
(22) Date of filing: 29.03.2024
(51) Int. Cl.: A01K 45/00, A01K 29/00, F21S 8/06, F21V 21/34, A01K 39/01

(54) **LIGHTING SYSTEM TO PROVIDE A LIGHT IN FOR INSTANCE A STABLE, A BARN, OR A POULTRY HOUSE**
BELEUCHTUNGSSYSTEM ZUR BEREITSTELLUNG VON LICHT, ZUM BEISPIEL IN EINEM STALLE ODER EINEM GEFLÜGELHAUS
SYSTÈME D'ÉCLAIRAGE POUR FOURNIR UNE LUMIÈRE PAR EXEMPLE DANS UNE ÉTABLE OU UN POULAILLER

(30) Priority: 11.04.2023 US 202363458479 P; 09.05.2023 EP 23172409
(43) Date of publication of application: 18.02.2026
(73) Proprietor: Signify Holding B.V., 5656 AE Eindhoven (NL)
(72) Inventor: MUONIO, Joshua Michael John, 5656 AE Eindhoven (NL); STEPHAN, Aaron Benjamin, 5656 AE Eindhoven (NL); GRAF, Ryan James, 5656 AE Eindhoven (NL); STOLT, Peter Edward, 5656 AE Eindhoven (NL)
(74) Representative: Verweij, Petronella Daniëlle
(86) International application number: PCT/EP2024/058759
(87) International publication number: WO 2024/213418

(56) References cited:
- EP-A1- 1 442 252
- EP-A1- 3 222 909
- AU-A1- 2015 202 273
- DE-A1- 2 748 606
- US-B1- 11 226 075

## Description

### FIELD OF THE INVENTION

The invention relates to a light generating system. Further, the invention relates to an animal arrangement. The invention also relates to a method for illuminating at least part of the animal arrangement.

### BACKGROUND OF THE INVENTION

Light generating systems are known in the art. For instance, US 20230000059 describes a lighting system for a poultry feeding house including a wire harness attachable to an existing feeding house shocker wire or feed auger pipe and a lighting fixture positioned beneath the wire harness and positionable on the feed auger pipe. A wire connection secured to the wire harness encapsulates wire leads to power and control the lighting fixture.

US 11 226 075 B1 discloses a light fixture for use on a tubular structure, such as in a poultry feeder system.

### SUMMARY OF THE INVENTION

Poultry lighting has traditionally used balanced lighting across a barn. However, traditional balanced lighting may not suitably illuminate an animal enclosure such as a barn or a chicken coop (or poultry house). Suitably illuminating the animal enclosure may impact the quality of life and the welfare of animals housed in the animal enclosure. Hence, it is desired to provide lighting that may promote the welfare of animals housed in the animal enclosure. A modular system using screw clamps or metal mounting clamps that require special crimp tooling might be applied. However, such a lighting system may require specialized tools to be mounted. Additionally, it may not always be easy to install lighting in barns. Hence, a lighting system that facilitates the ease of mounting and removal is desired.

Hence, it is an aspect of the invention to provide an alternative light generating system, which preferably further at least partly obviates one or more of the above-described drawbacks. The present invention may have as object to overcome or ameliorate at least one of the disadvantages of the prior art, or to provide a useful alternative.

According to a first aspect, the invention provides a light generating system comprising a light generating device and a connector configuration, wherein: (I) the light generating device comprises (i) a light source, (ii) a first side, and (iii) a second side; (II) the light source comprises a solid state light source and is configured to generate light source light, wherein the light generating device is configured such that during operation of the light source, at least part of the light source light emanates from the first side; (III) the connector configuration is configured at the second side of the light generating device, and comprises a first hook structure, a second hook structure, and a support structure; (IV) the first hook structure comprises a first hook part defining a first hook opening, a first hook opening access, and a first hook end, wherein the second hook structure comprises a second hook part defining a second hook opening, a second hook opening access, and a second hook end, wherein relative to a main axis (A), the hook parts are at least partly configured at different sides of the main axis (A), and the hook ends are configured at different sides of the main axis (A); (V) the support structure comprises a support structure top part, wherein the support structure is configured between the first hook structure and the second hook structure; and (VI) the light generating device is configured to be associated to the support cable with the support cable being configured (along the main axis (A)) through the hook openings and on the support structure top part, wherein the support structure top part is configured to exert a force on the support cable when the light generating device is associated to the support cable. Further, in an aspect the invention may (also) provide a method of attachment of the light generating device to a steel cable (i.e., the support cable). Especially, the light generating device may be positioned close to the support cable and be rotated to align the support cable with the main axis (A) (and configure the support cable passing through first hook opening and the second hook opening, and in contact with the support structure top part).

With such a light generating system, a light gradient may be provided, e.g. by mounting (small) light generating devices along the feedline as opposed to having ceiling or hanging lights that may flood the barn floor. Such a light generating system may provide a welfare enhancement for the poultry (or other animals). Further, the invention may allow a simple mounting method, enabling quick installation of the light generating device with minimal installation cost. This system may further alleviate these mounting issues by being easy to mount and by being rotated in place. Hence, the invention may provide a lighting system to provide a light in for instance a stable, a barn, or a poultry house, wherein for instance the light may be provided such that an animal area may be inhomogeneously illuminated.

As indicated above, the light generating system comprises a light generating device, and a connector configuration. Here below, features in relation to the light generating device are described.

The light generating device comprises a light source. The light source comprises a solid state light source. Especially, the light source may be configured to generate light source light. More especially, the solid state light source may be configured to generate light source light. In a specific embodiment, the light source comprises a solid state LED light source (such as an LED or laser diode (or "diode laser")). The term "light source" may also relate to a plurality of light sources, such as 2-2000 (solid state) LED light sources. Hence, the term LED may also refer to a plurality of LEDs. Further, the term "light source" may in embodiments also refer to a so-called chip-on-board (COB) light source. The term "COB" especially refers to LED chips in the form of a semiconductor chip that is neither encased nor connected but directly mounted onto a substrate, such as a PCB. Hence, a plurality of light emitting semiconductor light source may be configured on the same substrate. In embodiments, a COB is a multi LED chip configured together as a single lighting module.

The term "light source" may also refer to a chip scaled package (CSP). A CSP may comprise a single solid state die with provided thereon a luminescent material comprising layer. The term "light source" may also refer to a midpower package. A midpower package may comprise one or more solid state die(s). The die(s) may be covered by a luminescent material comprising layer. Herein, the term "light source" may also especially refer to a small solid state light source, such as having a mini size or micro size. For instance, the light sources may comprise one or more of mini LEDs and micro LEDs. Especially, in embodiment the light sources comprise micro LEDs or "microLEDs" or "µLEDs". Herein, the term mini size or mini LED especially indicates to solid state light sources having dimensions, such as die dimension, especially length and width, selected from the range of 100 µm - 1 mm. The term "light source" may refer to a semiconductor light-emitting device, such as a light emitting diode (LEDs), a resonant cavity light emitting diode (RCLED), a vertical cavity laser diode (VCSELs), an edge emitting laser, etc... The term "light source" may also refer to an organic light-emitting diode (OLED), such as a passive-matrix (PMOLED) or an active-matrix (AMOLED). In a specific embodiment, the light source comprises a solid-state light source (such as an LED or laser diode). In an embodiment, the light source comprises an LED (light emitting diode). The terms "light source" or "solid state light source" may also refer to a superluminescent diode (SLED).

In embodiments, the light source may be configured to provide primary radiation, which is used as such, such as e.g. a blue light source, like a blue LED, or a green light source, such as a green LED, and a red light source, such as a red LED. Such LEDs, which may not comprise a luminescent material ("phosphor") may be indicated as direct color LEDs. In other embodiments, however, the light source may be configured to provide primary radiation and part of the primary radiation is converted into secondary radiation. Secondary radiation may be based on conversion by a luminescent material. The secondary radiation may therefore also be indicated as luminescent material radiation. The luminescent material may in embodiments be comprised by the light source, such as an LED with a luminescent material layer or dome comprising luminescent material. Such LEDs may be indicated as phosphor converted LEDs or PC LEDs (phosphor converted LEDs). In other embodiments, the luminescent material may be configured at some distance ("remote") from the light source, such as an LED with a luminescent material layer not in physical contact with a die of the LED. Hence, in specific embodiments the light source may be a light source that during operation emits at least light at wavelength selected from the range of 380-470 nm. However, other wavelengths may also be possible. This light may partially be converted by the luminescent material.

The term "light source" may (thus) refer to a light generating element as such, like e.g. a solid state light source, or e.g. to a package of the light generating element, such as a solid state light source, and one or more of a luminescent material comprising element and (other) optics, like a lens, a collimator. A light converter element ("converter element" or "converter") may comprise a luminescent material comprising element. For instance, a solid state light source as such, like a blue LED, is a light source. A combination of a solid state light source (as light generating element) and a light converter element, such as a blue LED and a light converter element, optically coupled to the solid state light source, may also be a light source (but may also be indicated as light generating device).

As mentioned above, in embodiments, the light generating device may comprise a light source, a first side, and a second side. The configuration of the aforementioned features in relation to the light generating device are described herein.

In embodiments, the light generating device may comprise a three-dimensional geometry substantially defined by the first side, the second side and a side face. In embodiments, the light generating device may comprise a cylindrical geometry wherein the first side and the second side may comprise a circular cross-section and the side face may be curved. Alternatively, in embodiments, the light generating device may comprise a polygonal geometry, wherein the first side and the second side may comprise a polygonal cross-section and the light generating device may comprise a plurality of side faces connecting the first side to the second side. In further embodiments, the first side may be configured parallel to the second side. However, this may not always be necessary i.e., the first side may not be configured parallel to the second side. Hence, in summary, the light generating device may comprise a plurality of different three-dimensional geometries.

The light generating device is configured such that during operation of the light source, at least part of the light source light emanates from the first side. Hence, in embodiments, at least part of the first side (of the light generating device) may be transmissive for light, especially at least part of the first side may be transmissive for light source light. Analogously, in embodiments, at least part of the side face may (also) be transmissive for light, especially the side face may be transmissive for light source light. Hence, in this way, light source light may especially escape the light generating device via the first side. Additionally, in embodiments, the light source light may escape the light generating device via the side face.

The light generating device may comprise an essentially closed element, hosting the light source, and comprising a light transmissive window (or exit window) which is transmissive for the light source light. The light generating device may comprise a first part comprising the light transmissive window, and a second part, comprising the second side. These two parts may be associated to each other, e.g. via screws and/or a click connection, or a screw-click connection, etc., i.e. means known in the art. The first part may be indicated as "window part" or "bottom part" and the second part may be indicated as "top part". The second part may also optionally comprise further electronics. The light transmissive window may e.g. be comprise PC (polycarbonate) or PMMA (polymethyl methacrylate), or another light transmissive polymeric material. The top part may in embodiments not be light transmissive. Hence, in embodiments the material of the top part and bottom part may be selected such that the top part is not light transmissive for the light source light and (at least part (i.e. the light transmissive window) of) the bottom part is light transmissive for the light source light.

As mentioned above, the light generating system comprises the connector configuration. Especially, the connector configuration is configured at the second side of the light generating device. Further the connector configuration comprises a first hook structure and a second hook structure.

The first hook structure comprises a first hook part defining a first hook opening, a first hook opening access, and a first hook end. Furthermore, in embodiments, the first hook structure may comprise a first hook base. The first hook base may especially be physically secured to the second side (of the light generating device). Analogously the second hook structure comprises a second hook part defining a second hook opening, a second hook opening access, and a second hook end. Furthermore, in embodiments, the second hook structure may comprise a second hook base. The second hook base may especially be physically secured to the second side (of the light generating device).

Here, the term "physically secured" may refer to a first element being coupled to a second element such that there may be no relative motion between the first element and the second element. Especially, the first element may be secured to the second element by one or more mechanical means such as by screwing, riveting, bolting, male-female connectors, etc. Furthermore, the first element may especially be secured (or attached) to the second element by means of an adhesive. Yet further, in embodiments, the first element and the second element may be a monolithic body. Hence, in this way, the first element and the second element may be "physically secured" such that there may be no relative motion between the first element and the second element. **In** summary, in embodiments, the first hook structure may be "physically secured" to the second side (of the light generating device). Further, in embodiments, the second hook structure may be "physically secured" to the second side (of the light generating device).

**In** embodiments, the first hook structure may be configured such that the first hook base may be physically secured to the second side and the first hook structure may protrude (or extend) from the second side. Analogously, in embodiments, the second hook structure may be configured such that the second hook base may be physically secured to the second side and the second hook structure may protrude (or extend) from the second side.

**In** embodiments, the first hook structure may have a shape selected from the group of an L-shape, a (disconnected) P-shape, a J-shape or a U-shape. For instance, considering a J-shape, the first hook base (and/or the second hook base) may especially be the top of the character "J", the curved part of the character "J" may especially provide the first hook opening access (and/or the second hook opening access), the curved region (at least partially) enclosed by the bottom curvature of the character "J" may define the first hook opening (and/or the second hook opening), and the bottom extremity of the character "J" may especially be the first hook end (and/or the second hook end). **In** other words, the first hook structure (and/or the second hook structure) may in embodiments resemble the character "J", especially an inverted character "J" attached to the second side. Note that, characters (or the alphabet) are used to describe the shape of the first hook structure (and/or the second hook structure) only for the sake of illustration. **In** embodiments, the first hook structure (and/or the second hook structure) may (also) comprise shapes other than those defined by characters (of the alphabet).

**In** summary, the first hook structure may comprise the first hook base (physically secured to the second side), the first hook opening, the first hook opening access and the first hook end. Especially, the first hook part may define the first hook base, the first hook opening, the first hook opening access and the first hook end. Analogously, the second hook structure may comprise the second hook base (physically secured to the second side), the second hook opening, the second hook opening access and the second hook end. Especially, the second hook part may define the second hook base, the second hook opening, the second hook opening access and the second hook end.

Note that, in embodiments, the first hook structure and the second hook structure may have a unique shape i.e., the first hook structure and the second hook structure may especially have a different shape. However, in (general) embodiments, the first hook structure and the second hook structure may (also) be identical in shape.

The above-indicated second part and the first hook structure and the second hook structure may in embodiments be a monolithic body, and may e.g. obtained via die-casting, 3D printing, etc.

As mentioned above, the first hook base and the second hook base may be physically secured to the second side. Therefore, in this way, the light generating device may especially be physically secured to the first hook structure and/or the second hook structure. Hence, it follows that in embodiments, the light generating device may be supported by the first hook structure and the second hook structure. For instance, in embodiments, the light generating system may especially be suspended by means of the connector configuration. That is, in embodiments, the light generating device may especially be supported by the first hook structure and/or the second hook structure.

Note that the connector configuration may not necessarily be limited (only) to the first hook structure and the second hook structure. **In** embodiments, the connector configuration may comprise a third hook structure, especially (even) a fourth hook structure. **In** further embodiments, the connector configuration may comprise n hook structures, wherein n may be at least 4, such as up to about 10. Additional hook structures may in embodiments (also) comprise a hook base, a hook opening, a hook opening access and a hook end. The additional hook structures may provide the benefit of supporting either larger light generating devices, or heavier light generating devices, or both.

**In** embodiments, the first hook base and the second hook base may be configured on different sides of the main axis (A). Here below, the (spatial) configuration of the first hook structure and the second hook structure on the second side (of the light generating device) is described.

**In** embodiments, a main axis (A) may be defined parallel to the second side (of the light generating device). Alternatively or additionally, in embodiments, the main axis (A) may be defined passing through the first hook opening and the second hook opening. The position of the first hook structure and the second hook structure may be defined in relation to the main axis (A). Especially, the first hook opening and the second hook opening may comprise cross-sectional planes, which are configured parallel, with the main axis configured perpendicular to these cross-sectional planes.

**In** embodiments, a projection of the main axis (A) and the second side may divide the second side into two parts. Especially, the surface of the second side may be divided (by the projection of the main axis (A) on the second side) into a second side first part and a second side second part. **In** embodiments, the first hook structure may be defined on the second side first part and the second hook structure may be defined on the second side second part. Especially, the first hook base may be physically secured to the second side on the second side first part and the second hook base may be physically secured to the second side on the second side second part. Hence, in this way, the first hook structure and the second hook structure may especially be configured on different sides of the main axis (A).

Further, in embodiments, the first hook end, the first hook opening and the first hook opening access may be configured away from the first hook base. Especially, the first hook end, the first hook opening and the first hook opening access may extend away from the first hook base. Analogously, in embodiments, the second hook end, the second hook opening and the second hook opening access may be configured away from the second hook base. Especially, the second hook end, the second hook opening and the second hook opening access may extend away from the second hook base. For example, for a hook having a "P-shape" wherein the base of the character "P" is the hook base and the loop of the character "P" is the hook opening, it may apply that the hook opening, the hook opening access and the hook end extend away from the location of the hook base (i.e. the bottom of the character "P"). Therefore, in embodiments, the first hook structure may be configured such that the first hook base is physically secured to the second side first part and at least part of the first hook opening, at least part of the first hook opening access and at least part of the first hook end extend over the main axis (A). Similarly, in embodiments, the second hook structure may be configured such that the second hook base is physically secured to the second side second part and at least part of the second hook opening, at least part of the second hook opening access and at least part of the second hook end extend over the main axis (A). In further embodiments, the first hook base may be configured on the second side first part and the first hook end may extend over the main axis (A), especially the first hook end may extend over part of the second side second part. Analogously, in further embodiments, the second hook base may be configured on the second side second part and the second hook end may extend over the main axis (A), especially the second hook end may extend over part of the second side first part.

In summary, the first hook base and the second hook base may be configured on different sides of the main axis (A). Especially, the first hook base and the second hook base may be configured on the second side first part and the second side second part, respectively. Hence, relative to the main axis (A), the hook parts are at least partly configured at different sides of the main axis (A), and the hook ends are (also) configured at different sides of the main axis (A). The first hook structure and the second hook structure may facilitate associating the light generating device to the support cable. In embodiments, the support cable may be configured in the first hook opening via the first hook opening access, and analogously, in embodiments, the support cable may be configured in the second hook opening via the second hook opening access. Hence, in this way, in embodiments, the first hook structure and the second hook structure may facilitate suspending the light generating device from the support cable.

As mentioned above, the connector configuration comprises a support structure (in addition to the first hook structure and the second hook structure). The support structure comprises e the support structure top part.

In embodiments, the support structure may be aligned along the main axis (A) such that the main axis (A) passes through at least a part of the first hook opening, the second hook opening and over the support structure (especially the support structure top part). In further embodiments, the support structure may be aligned along the main axis (A) such that the main axis (A) passes through at least a part of the first hook opening, the second hook opening and (also) through the support structure (especially the support structure top part). In such embodiments (wherein the main axis (A) passes through the support structure top part), the support structure top part may especially have to be displaced perpendicular to the main axis (A) to configure the support cable along the main axis (A).

Note (also) that the connector configuration may in embodiments be at least partially flexible. Hence, in embodiments, the support structure top part, the first hook structure and the second hook structure may be partially deformed (or displaced) to accommodate the support cable. Alternatively, in embodiments, the support cable may be partially deformed (or bent) to be accommodated by the connector configuration.

The support structure is configured between the first hook structure and the second hook structure. In embodiments, the support structure may be configured between the first hook structure and second hook structure such that the support structure is positioned equidistant from the first hook structure and the second hook structure (though non-equidistant is not excluded herein).

In embodiments, the support structure top part may especially be configured to be displaced (or moved) along a direction perpendicular to the main axis (A). In embodiments, moving the support structure top part may mechanically load the support structure top part, that is, the support structure top part may exert a force to resist the mechanical loading. Hence, in this way, the support structure top part may be displaced along a direction perpendicular to the main axis (A) and the support structure top part may especially exert a force to oppose the mechanical loading provided to displace the support structure top part.

As mentioned above, the connector configuration comprises the first hook structure, the second hook structure and the support structure. Especially, the aforementioned elements may facilitate supporting the light generating device.

The light generating device is configured to be associated with a support cable. Essentially any elongated structure may be used to support the light generating device via the connector configuration, such as a cable, a rod, a string, a pipe, etc.. Especially, herein the (elongated) support for the light generating device may be a support cable. The invention is herein especially explained in relation to the support cable, though other structures that may facilitate supporting the light generating device are herein not excluded. Therefore, the light generating device may especially be configured to be associated to a support cable. More especially, the light generating device may be clamped to the support cable. These features are described herein.

In embodiments, the support cable may be configured along the main axis (A). Especially, the support cable may pass through the first hook opening, over the support structure top part, and through the second hook opening. As mentioned before, the first hook base and the second hook base may be configured on either side of the support cable. Furthermore, in embodiments, the first hook end and the second hook end may (also) be configured on either side of the support cable. In embodiments, the support cable may be configured (substantially) along the main axis (A) by displacing the support structure top part. Consequently, the support structure top part exerts a force on (or against) the support cable. Hence, in this way, the support cable may especially be clamped between the first hook opening and the support structure top part. Furthermore, the support cable may (also) simultaneously be clamped between the second hook opening and the support structure top part. Furthermore, the first hook base and the second hook base may be configured on the second side first part and the second side second part (respectively), and the first hook end and the second hook end may be configured to extend over the main axis to the second side second part and the second side first part (respectively). Hence, such a connector configuration may straddle the support cable from two sides, especially from either side of the support cable; thus, securing the light generating device to the support cable.

In embodiments, the center of the support structure top part may be configured at a distance D₁ from the center of the first hook opening measured along the main axis (A). Further, in embodiments, the center of the support structure top part may be configured at a distance D₂ from the center of the second hook opening measured along the main axis (A). In embodiments, it may apply that D₁ = D₂. However, in further embodiments, D₁ and D₂ may be selected such that the center of the support structure top part is configured along an axis (perpendicular to the second side and) passing through the center of mass of the light generating device. Hence, in this way, the weight of the light generating device may be distributed equally between the first hook structure and the second hook structure. In embodiments, D₁ and D₂ may individually be selected from the range of 5-100 mm.

In embodiments, the second side may comprise a (virtual) second side plane passing through at least a part of the second side. Especially, the second side plane may be flat. Further, in embodiments, the center of the first hook opening may be configured at a distance H₁ measured perpendicular and relative to the second side plane, and the center of the second hook opening may be configured at a distance H₂ measured perpendicular and relative to the second side plane. In embodiments H₁ may be equal to H₂. However, in embodiments, H₁ may (also) not necessarily be equal to H₂. Note that it is herein not excluded that the connector configuration may in embodiments be curved (as the second side may be in embodiments be curved).

Further, in embodiments, the support cable may have a cross-sectional equivalent circular radius of R_{T}. The equivalent circular radius (or ECR) (or "equivalent circular radius") of an (irregularly shaped) two-dimensional shape is the radius of a circle of equivalent area. For instance, the equivalent circular diameter of a square with side a is a/SQRT(π). For a circle, the radius is the same as the equivalent circular radius. Would a circle in an xy-plane with a radius R be distorted to any other shape (in the xy-plane), without changing the area size, then the equivalent circular radius of that shape would be R. Especially, the support cable may have an essentially circular cross-section.

Hence, the support cable may in embodiments be selected such that it fits in the first hook opening and second hook opening, and especially also that it fits through the first hook opening access and the second hook opening access. Further, the support cable may in embodiments be selected such, that rotation of the light generating device about the support cable is subject to friction. In embodiments, the support cable may be selectable and the first hook structure and second hook structure may be configured such that over at least 45°, more especially over at least 90°, such as over 90-180°, the support cable has physical contact with (both) the first hook part and the second hook part. Hence, the support cable may be a predefined support cable, such that in embodiments it fits in the connector configuration and provide a supporting function to the light generating device and in embodiments a rotation about the support cable or one or more translations (if possible) perpendicular to the support cable, may not lead to a disconnection of the light generating device from the support cable. Note that the term "predefined" may especially refer to chosen or designed to be functionally coupled to the light generating device. Hence, the dimensions may be selected such, that the cross-sectional equivalent circular radius of R_{T} of the support cable may essentially be the same as a first radius r1 comprised by the first hook part and a second radius comprised by the second hook part. Hence, in embodiments the (equivalent circular) radius of the (predefined) support cable may be selected from the range of 0.75-1, like 0.85-1 times the first radius r1 and/or selected from the range of 0.75-1, like 0.85-1 times the second radius r2. Especially, the first radius r1 and the second radius r2 are identical.

Furthermore, in embodiments, the center of the support structure top part may be configured at a distance H_{S} measured perpendicular and relative to the second side plane. Therefore, in embodiments, the support structure top part may have to be displaced in a direction perpendicular to the main axis (A) to configure the support cable along the main axis (A). **In** this way, the support structure top part may especially (be displaced and hence) exert a force on the support cable. Thus, securing the light generating device to the support cable.

In embodiments, the light generating system may comprise additional features or elements that may facilitate the ease of configuring the support cable along the main axis (A). Such features are described herein.

In embodiments, the support structure may comprise a recess structure along at least part of the main axis (A). Especially, the recess structure may be a ditch, channel, or furrow. Further, in embodiments, the recess may especially be configured on the second side of the light generating device. In embodiments, the recess may be configured along a recess axis (A_{R}). In embodiments, the recess axis (A_{R}) may be configured essentially parallel to the main axis. this may facilitate fixating the support cable to the light generating device. **In** other embodiments, the recess axis (A_{R}) may intersect the main axis (A). This may provide the benefit of at least partially aligning the support cable to the main axis (A), and thus, facilitating the ease of associating the light generating device to the support cable. Furthermore, the recess structure may provide the benefit of preventing the support cable from slipping out of the recess structure. Especially, the support cable may be slid into the recess by moving the light generating device towards the support cable, optionally including one or more partial rotations.

In further embodiments, the recess structure may comprise a saddle form-like shape. The saddle form-like shape may refer to a shape comprising a valley configured between two ridges. Especially, the edge of the recess structure may comprise ridges that are configured on either side of a central valley. In embodiments, the support cable may be passed over the ridge and into the valley. Thus, securing the support cable in the recess structure. Furthermore, the ridges may provide the benefit of preventing the support cable from slipping out of the recess structure. Hence, the recess structure comprising a saddle form-like shape may especially facilitate ease of configuring the support cable in the recess (of the recess structure) and may prevent the support cable from slipping out of the recess structure. Especially, in embodiments the central valley may substantially coincide with the recess axis (A_{R}).

In yet further embodiments, the recess structure may comprise two recess parts. Especially, the two recess parts may be configured on either side of a central recess point. In specific embodiments, the central recess point may be configured along a line through the center of the support structure top part (and perpendicular to the main axis). In embodiments, the recess parts may have the same width along the entire length of the recess structure. However, in embodiments, the recess structure may (also) vary in width along the length of the recess structure. Especially, the recess parts may broaden in a direction further away from the central recess point. Hence, in this way, the recess structure comprising such recess parts may especially provide the advantage of guiding the support cable into the recess structure.

In embodiments, the recess parts may have recess axes (A_{R}) configured along the length of the recess parts. In further embodiments, the recess axis (A_{R}) may have a mutual first angle (α1) with the main axis (A). Especially, the first mutual angle (α1) may be selected from the range of 0≤α1≤90°, more especially 0<α1≤90°, such as selected from the range 5≤α1≤60°, especially selected from the range 10≤α1≤45°, more especially selected from the range 10≤α1≤30°. Hence, in specific embodiments, the recess structure comprises two recess parts configured at both sides of a central recess point, wherein the recess parts broaden in a direction away from the central recess point, wherein the recess parts have recess axes (A_{R}), wherein the recess axes (A_{R}) each have a mutual first angle (α1) with the main axis (A) selected from the range of 0<α1≤90°. Such recess parts may in embodiments facilitate configuring (or arranging) the support cable at an angle α1 to the main axis (A), and then aligning the support cable with the main axis (A) by rotating the light generating device. This may provide the benefit of positioning the support cable without being obstructed by the first hook structure and the second hook structure, and then aligning the support cable along the main axis (A) by rotating the light generating device. Hence, the two recess parts may be comprised by a saddle form-like shape, or may essentially provide the saddle form-like shape. The saddle form-like shape may comprise a length axis, comprising both recess axis (A_{R}). This length axis of saddle form-like shape may thus have a mutual first angle (α1) with the main axis (A).

Especially, in embodiments the central valley(s) may substantially coincide with the recess axes (A_{R}). Further, in specific embodiments the recess axes (A_{R}) are configured on a single axis, have a mutual first angle (α1) with the main axis (A) selected from the range of 0≤α1≤90°, such as at least about 5°.

As mentioned above, the connector configuration may in embodiments comprise the first hook structure, the second hook structure and the support structure. Further, in embodiments, the first hook structure, the second hook structure and the support structure may comprise a material, also indicated as "support material". Note that in embodiments, the first hook structure, the second hook structure and the support structure may (all) comprise the same support material. However, in embodiments, the first hook structure, the second hook structure and the support structure may (also) comprise a unique (and different) support material.

In embodiments, the support material may be a plastic, for example a polycarbonate. Especially, the support material may (individually) be selected from the group of a polycarbonate (PC), a polymethyl methacrylate (PMMA), and a polyvinyl chloride (PVC). Further, in embodiments, the support material may comprise a 3D printable material. Additionally or alternatively, in embodiments, the support material may comprise a metal. Especially, the support material may be selected from the group of aluminum, brass, copper, steel, ductile iron, stainless steel and titanium. It will be apparent to the skilled person that other suitable metals and/or alloys may also be an applicable choice for a support material.

Furthermore, in embodiments, the support structure may be spring-based and/or the support structure may comprise a resilient material.

In embodiments, the support structure may comprise a resilient material. A resilient material is a material that may be deformed by providing mechanical stress, store the mechanical energy required to deform said material, and release the mechanical energy upon the removal of the mechanical stress provided. Here below, the aforementioned features in relation to embodiments of the invention are described. In embodiments, the support structure may be deformable, especially the support structure may be deformed by the application of mechanical stress (or mechanical loading). Since the support structure top part may (in embodiments) comprise a resilient material, upon providing mechanical stress to the support structure (especially the support structure top part), the support structure may be deformed. Furthermore, the deformed support structure (especially the support structure top part) may especially store the mechanical energy provided to deform the support structure (especially the support structure top part). Subsequently, in embodiments, the support structure (especially the support structure top part) may release the stored mechanical energy upon removal of mechanical stress. Herein, mechanical stress may comprise one or more of tensile stress, compressive stress, and shear stress. This may provide the benefit of securing the light generating device to the support cable. Especially, the support structure may be deformed by configuring the support cable along the main axis (A) (i.e., via the first hook opening and the second hook opening, and over the support structure top part) and (hence) the light generating device may be secured to the support cable by the application of a (counter) force exerted by the support structure top part on the support cable. Hence, when the support cable may be configured in the first hook opening and the second hook opening, the support cable may exert a force on the support cable via the (resilient) support element. This may facilitate keeping the support cable in place.

The term "functionally coupled" may in embodiments refer to coupling a first element to a second element such that the two elements may perform (or share) the same function. For instance, in embodiments, actuating the first element may result in the actuation of the second element. Likewise, displacement of the first element may result in the displacement of the second element. In such embodiments, the first element may be referred to as being "functionally coupled" to the second element.

The support structure top part may be comprised by the support element. Especially, when the support cable is configured through the first hook structure and the second hook structure, the support structure top part may be configured in physical contact with the support cable. As mentioned above, in embodiments, the support structure may especially be configured to be displaced (or moved) along a direction perpendicular to the main axis (and in specific embodiments perpendicular to the second side of the light generating device). Analogously, in embodiments, the support element may be movable or extendable along a support element axis (As). Especially, the support element axis (As) may be orthogonal to the main axis (A). Furthermore, the support element axis (As) may be perpendicular to the second side (of the light generating device), especially the second side plane.

In embodiments, the support element may be configured to exert a force on the support cable. Hence, in this way, the support structure top part may in embodiments exert a force on the support cable. Hence, in specific embodiments, the support structure comprises a support element, wherein the support element is movable or extendable along a support element axis (A_{S}) which is orthogonal to the main axis (A), wherein the support element is configured to exert a force on the support cable. This may in embodiments be on the basis of a resilient support element (see also above) and/or on the bases of a spring-based support element.

Hence, in embodiments, the support element may be spring based. That is, in embodiments, the support structure may comprise a support spring. The support spring may be configured to exert a force on the support element, when the support element is pressed in a direction of the first side. Hence, when the support cable may be configured in the first hook opening and the second hook opening, the support cable may exert a force on the spring via the support element. Thereby, in embodiments, effectively the support spring may exert a force on the support cable. This may facilitate keeping the support cable in place.

It will be apparent to the skilled person to select a suitable spring stiffness to secure the light generating device to the support cable.

In embodiments, the support spring may be compression springs selected from the group comprising convex springs, concave springs, conical springs, straight coil springs, variable pitch springs, etc. Convex springs are barrel-shaped and may have larger diameter coils in the middle and smaller diameter coils at the ends. Concave springs may be hourglass-shaped and may have smaller diameter coils in the middle and larger diameter coils at the ends. Conical springs may have coils that taper in diameter from one end to the other. Straight coil springs may have a uniform diameter along the length of the spring. Variable pitch springs may have coils with a varying pitch along the length of the spring. In further embodiments, the support spring may be a leaf spring. It will be apparent to the skilled person that the choice of the (support) spring may not be limited to the examples mentioned above and that any other suitable spring may (also) be selected. Hence, in embodiments, the support element comprises a resilient material or is spring-based.

In embodiments, the light generating device may be electrically powered. Hence, the light generating device may especially comprise features and/or elements to electrically power the light generating device. In embodiments, the light generating device may be electrically powered. Especially, the light generating device may be powered by a DC power supply. The term "DC power supply" refers to a power supply that provides direct current to the light generating device. More especially, the light generating system may be electrically coupled to a 24V DC power supply. Note that, in some embodiments, the light generating device may (also) be powered by an AC power supply. The term "AC power supply" refers to a power supply that provides alternating current to the light generating device. The power supply may be configured external to the light generating device.

In embodiments, the light generating device may comprise a trench for at least partly hosting a predefined electrical cable. The term "trench" may refer to a channel or ditch. Herein, the second side of the light generating device may especially comprise a trench. Note that the trench may especially be different from the recess structure and may especially be configured in addition to the recess structure. Hence, especially in embodiments the support cable may not be the predefined electrical cable for powering the light generating device (see also below). In embodiments, the trench may provide a conduit via which at least part of the predefined electrical cable may be routed. The trench may in embodiments be configured essentially parallel to the main axis (A).

Note that the term "predefined" may especially refer to chosen or designed to be functionally coupled to the light generating device. Hence, the dimensions may be selected such, that the electrical cable fits in the trench, but may also be selected such that there is a clearance fit (such as close running clearance, sliding clearance, close clearance, and locational clearance) or a transition fit. Hence, when configured in the trench, in embodiments a width of the electrical cable may be in the order of 0.5-1, like 0.75-1, like 0.85-1 times the width of the trench. Alternatively or additionally, when configured in the trench, in embodiments a height of the electrical cable may be in the order of 0.5-1, like 0.75-1, like 0.85-1 times the available height in the trench.

In embodiments, the trench may comprise one or more electrically conducting elements. The electrically conducting element may especially comprise a contact point, wherein the contact point facilitates conduction of electricity (and electrical contact between the predefined electrical cable and the light source). Especially, the electrically conducting element may comprise a sharp shape. In embodiments, the sharp shape may be configured to pierce the isolator material of the predefined electrical cable. Hence, the sharp point may contact the electrical conductor material comprised by the predefined electrical cable, thus establishing electrical contact between the predefined electrical cable and the light generating device. Therefore, in embodiments, the trench comprises an electrically conducting element comprising a sharp shape; wherein the electrically conducting element is configured to penetrate an isolator shell of the predefined electrical cable when the trench is hosting such predefined electrical cable comprising the isolator shell, wherein the electrically conducting element is functionally coupled to the light generating device. Hence, in embodiments, the electrically conducting element may comprise an insulation piercing connector. An insulation piercing connector ("IPC") may contact a live wire (such as the predefined electrical cable) without stripping the insulation. The IPC makes a connection without any exposure to the predefined electrical cable. Hence, the IPC especially improves safety as it may be completely safe for a user to touch or handle the IPC.

In embodiments, the trench may (also) comprise a plurality of electrically conducting elements, especially at least two (though more may be possible). This may be advantageous in making parallel electrical connections in an existing electrical circuit, thus facilitating the configuration of a plurality of light generating devices along the same predefined electrical cable. Furthermore, in embodiments, the light source may comprise two (or more) electrodes. Especially, the two (or more) electrodes (of the light source) may be functionally coupled to the two (or more) electrically conducting elements. In specific embodiments, the trench comprises at least two electrically conducting elements of which two are configured functionally coupled to two different electrodes of the light source.

In embodiments, the second side of the light generating device may comprise both the recess structure and the trench.

In embodiments, the connector configuration may be configured to be at least partially removable. Especially, the connector configuration may comprise a connector hinge, especially the connector configuration may be rotated about the connector hinge to provide access to the trench. Hence, the trench may especially be accessible in a partly removed configuration of the support structure. Hence, in this way, the predefined electrical cable may especially be configured in the trench (in a partly removed configuration of the connector configuration). Further, in such a configuration, the electrically conducting element may in embodiments be forced through the isolator shell, thus electrically coupling the predefined electrical cable to the electrodes of the light generating device, via the electrically conducting element. For instance, a force may be applied when the partly removed configuration of the support structure is returned to a configuration suitable for operation. Hence, in specific embodiments the connector configuration is configured at least partially removable from the light generating device, wherein the connector configuration is configured such that: (i) in an at least partly removed configuration, and in the absence of the predefined electrical cable, the trench is accessible to the predefined electrical cable, and (ii) when configuring the connector configuration in a functional coupling to the light generating device, the electrically conducting element is forced through the isolator shell. The partly removed support structure may be configured (back) in a configuration where the trench is closed. For instance, the support structure may be fixated with screws and/or click-connections (and a hangable element) to the remainder of the light generating device.

As mentioned above, the light source may especially provide light source light. In embodiments, the light generating device (comprising the light source) may provide a light distribution. Features in relation to the distribution of light are described herein.

In embodiments, the light source light may comprise a first (dominant) peak wavelength in the range of 450-480 nm, such as in the range 455-475 nm, especially in the range 460-470 nm. Further, in embodiments, the light source light may comprise a second (dominant) peak wavelength in the range of 515-545 nm, such as in the range 520-540 nm, especially in the range 525-535 nm. In specific embodiments, the light source light comprises a first peak at a wavelength in the range of 450-480 nm, and a second peak at a wavelength range between 515-545 nm. In embodiments, the light source light may comprise ultraviolet light. In further embodiments, the light source light may comprise UV-A light. In embodiments, the light source light may (also) comprise UV-B light. In further embodiments, the light source light may comprise a combination of both UV-A light and UV-B light. Note that in embodiments, the light generating device may comprise a plurality of light sources. Hence, the light generating device may especially provide the aforementioned spectral light distribution. In embodiments, the light generating device may comprise a plurality of light sources, wherein two or more light sources are configured to generate light source light having different spectral power distributions, such as spectral power distributions comprise one or more of visible light and UV radiation, such as selected from UV-A, UV-B, UV-C, blue, cyan, green, yellow, amber, orange, and red light.

In embodiments, the light generating system (comprising the light generating device) may provide light source light in a wide beam. Especially, the light source light may comprise a full width at half maximum ("FWHM") in the range of -110° to 110°, such as in the range of -90° to 90°, especially in the range of -75° to 75°, more especially at least -50° to 50°. Especially, the light source light may have such full width half maximum values in two orthogonal planes. **In** embodiments, each light generating device may be configured to generate light source light with such beam (shape).

Additionally, in embodiments, the light generating system may comprise one or more optical elements configured downstream of the light source. Features or elements related to the optical element are described herein. **In** embodiments, the one or more optical elements may comprise beam shaping elements, such as one or more optical elements selected from a group of a lens, a lens arrangement, a collimator, and a hollow reflector. **In** embodiments, the lens arrangement may especially be a combination of one or more lenses. The collimator and/or the hollow reflector may especially beam shape light to provide a parallel beam of light. Hence, in this way, the one or more optical element may facilitate beam shaping the system light. In embodiments, the light transmissive window may comprise the optical element(s).

The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

Further, the light generating system may generate system light. Especially, the system light may comprise light source light.

The light generating device may comprise one or more light sources, such as in embodiments in the order of 1-48 (solid state) light sources, like selected from the range of 2-48 (solid state) light sources, such as selected from the range of 4-24 (solid state) light sources.

As mentioned above, the operation of the light generating device may especially be controlled by means of a controller. Hence, in embodiments, the light generating system may especially comprise a control system. Additionally or alternatively, the light generating system may comprise a driver to control the operation of the light generating system, especially the light generating device. The control system may be comprised by the light generating system or may be functionally coupled to the light generating system.

The control system may also be configured to receive and execute instructions from a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system.

The system, or apparatus, or device may execute an action in a "mode" or "operation mode" or "mode of operation" or "operational mode". The term "operational mode may also be indicated as "controlling mode". Likewise, in a method an action or stage, or step may be executed in a "mode" or "operation mode" or "mode of operation" or "operational mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

In a further aspect, is disclosed a kit of parts comprising the support cable and one or more light generating devices. In embodiments, the kit of parts may further comprise the predefined electrical cable. In further embodiments, the kit of parts may comprise a shock wire, especially the support cable may be configurable as a shock wire. As indicated above, the support cable may be selected of designed for the connector configuration.

In a further aspect, is disclosed an arrangement comprising the light generating system and the support cable.

In a further aspect, is disclosed an animal arrangement comprising an animal area and the light generating system. In embodiments, the support cable may be configured over the animal area. Further, in embodiments, the light generating device may be functionally coupled to a source of electrical energy (or power supply) via the predefined electrical cable. Hence, in specific embodiments, the invention provides an animal arrangement comprising an animal area and the light generating system, wherein: (I) the support cable is configured over the animal area; (II) the light generating device is functionally coupled to a source of electrical energy via the predefined electrical cable.

In a further aspect, is disclosed an animal area and the light generating system. An animal area may refer to any region or space wherein animals may be housed, especially an animal area may be an enclosed region or space wherein animals may be housed. For instance, an animal area in embodiments may be comprised by a fold (such as a sheepfold), a pound, a paddock, a sty (such as a pigsty), a cage, a stall, a coop, a barn, a stable, etc. Note that the animal area may in embodiments have different shapes and may have different areas. In embodiments, the animal area may have a rectangular shape, a circular shape, a polygonal shape, an oval shape, etc. In further embodiments, the animal area may also have other irregular shapes. The animal area may especially the area on which the animals may walk or rest. Hence, the animal area may e.g. be comprised by a stable, a barn, or a poultry house, but also in other housings for a plurality of animals.

In embodiments, the light generating system may comprise a plurality of light generating devices and connector configurations (i.e., each light generating device may comprise one connector configuration). Further, in embodiments, the support cable may be configured over the animal area. Especially, the support cable may be configured to support the plurality of light generating devices by the (respective) connector configurations. Furthermore, the plurality of light generating devices may be functionally coupled to a source of electrical energy via the predefined electrical cable. Hence, in this way, the plurality of light generating devices may in embodiments illuminate at least part of the animal area. Especially, the plurality of light generating devices may in embodiments illuminate the (entire) animal area. These features are described in more detail herein.

As mentioned above, the light generating system may be configured to be associated to the support cable, especially the light generating device may be suspended from the support cable. In further embodiments, a plurality of light generating devices may be configured to be associated to the support cable. Especially, the plurality of light generating devices may be suspended from the support cable. In further embodiments, a plurality of support cables may be configured over the animal area. Therefore, in embodiments, the plurality of light generating devices may be configured to be associated to the plurality of support cables, especially the plurality of light generating devices may be suspended from the plurality of support cables.

In embodiments, n support cables may be configured over the animal area. Further, in embodiments, (also) n predefined support cables may be configured over the animal area. Furthermore, in embodiments, the light generating system may comprise m light generating devices associated with the (each) support cable (especially, the trench comprised by the m light generating devices may host the (each) predefined electrical cable). In embodiments, n may be 1, or in other embodiments at least 2, such as at least 5. Further, in embodiments, m may be at least 2, such as at least 10. Hence, in embodiments, the light generating system may comprise (in total) m*n light generating devices. That is, in embodiments, the light generating system may comprise at least 4, such as at least 20, especially at least 50, light generating devices. Thus, the light generating devices may be arranged in a 2D array over the animal area. Hence, in this way, the arrangement of light generating devices over the animal area may hence provide a light gradient over the animal area. Note that in embodiments, the light generating devices may be configured above the animal area, e.g. at a height of at least 15 cm; the height may also depend upon the type of animal. Hence, in specific embodiments, the invention provides an animal arrangement comprising an animal area and the light generating system, wherein: (I) the light generating system comprises a plurality of light generating devices and connector configuration; (II) the support cable is configured over the animal area, wherein the support cable is configured to support the plurality of light generating devices by the (respective) connector configurations; and (III) the light generating device is functionally coupled to a source of electrical energy via the predefined electrical cable. With such an invention, the animal area may hence be illuminated, especially a light gradient may be provided over the animal area. The welfare benefits of the animal arrangement may be a key part of the restaurant industry's commitment to improving the welfare of animals in the protein supply chain.

In embodiments, the plurality of light generating devices may be configured such that an inhomogeneous distribution of the light source light on the animal area is obtained. For instance intensity ratios (based on power) on the animal area may in the order of at least 1:2, such as at least 1:4, up to about 1:20, such as up to about 1:15 (like about 1:10), with the highest intensity on the animal area essentially below the light generating devices and the lowest intensity on the animal array essentially between two light generating devices.

In addition to the support cable associated with the light generating device(s) and the predefined electrical cable configured to power the light generating device(s), a feed line and a shock wire may (also) be used. These features are described herein.

In embodiments, the animal arrangement may further comprise a feed line. The feed line may in embodiments be configured to provide one or more of a liquid and a feed at different locations in the animal area. Especially, the liquid and/or the feed may be flowed via the feed line. In further embodiments, the animal arrangement may comprise a plurality of feed lines. Further, in embodiments, the light generating system may be configured to provide light source light to one or more of the feed lines. Additionally, in embodiments, the light generating system may be configured to provide light source light to at least part of the animal area. Hence, in specific embodiments, the animal arrangement further comprises an (elongated) feed line, wherein the feed line is configured to provide one or more of liquid and feed (at different locations in the animal arrangement), wherein the light generating system is configured to provide light source light to one or more of the feed line and at least part of the animal area configured below the feed line.

In embodiments, a shock wire may be configured (or arranged) in the animal area. The shock wire may especially restrict or confine an animal to the animal area. In further embodiments, the support cable may be configured as the shock wire (or, the shock wire may (thus) be used as support cable). This may facilitate protecting the light generating devices from undesired contact by an animal.

In a further aspect, the invention provides a method for illuminating at least part of the animal arrangement, wherein the method comprises providing the light source light. In embodiments, the method may comprise providing light source light at a first (dominant) peak at a wavelength in the range of 450-480 nm. Further, in embodiments, method may comprise providing the light source light at a second (dominant) peak at a wavelength range between 515-545 nm. Furthermore, in embodiments, the method may comprise providing light source light comprising UV-A light, or UV-B light, or a combination thereof. Further, the method may comprise providing the light source light with a FWHM in the range of -90° to 90°. Hence, in specific embodiments, the invention provides a method for illuminating at least part of the animal arrangement, wherein the method may comprise providing: (i) the light source light at a first peak at a wavelength in the range of 450-480 nm, and a second peak at a wavelength range between 515-545 nm; (ii) the light source light comprising ultraviolet light, especially UV-A or UV-B light, or a combination thereof; and (iii) the light source light at a FWHM in the range of -90° to 90°.

In a further aspect, is disclosed a method of mounting a light generating system according to the present invention to a support cable, wherein the method comprises: positioning the support cable through the hook openings and on the support structure top part of the connector configuration of the light generating system, wherein the support structure top part is exerting a force on the support cable; associating the light generating device (hence the light generating system) to the support cable by abutting the first hook part and second hook part to the support cable.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1a-1f schematically depicts embodiments of the invention;
Figs. 2a-2b schematically depicts (application) embodiments, such as including the recess structure 531;
Fig. 3 schematically depicts an embodiment of the support element 535;
Fig. 4 schematically depicts an embodiment of the trench 600; and
Fig 5 schematically depicts an embodiment of the animal arrangement 2000. The schematic drawings are not necessarily to scale.

### DETAILED DESCRIPTION OF THE EMBODIMENTS

Here below, some embodiments are described.

The light generating device described herein may in embodiments be mounted on the feed line with a unique clamping mechanism to connect it to the "shocker wire" i.e., a (steel) cable along the top of the feed line. Furthermore, such a light generating device may incorporate two hook structures that may in embodiments secure the light generating system to the steel "shocker wire" cable. Further, to improve the performance of the hook latching and ease of mounting in the system a center tensioning and alignment button (i.e., the support structure) may be utilized. This may allow the user to quickly align the light generating device in position and guides the rotation into a secured position. The button (i.e., the support structure top part) may slightly be raised and applies an upward force, locking the steel cable into the cable hooks (i.e., the hook structure). However, other embodiments may also be possible.

Furthermore, each individual light generating device may be connected to a main 24V DC power feed via a mounting clamp with insulation piercing connectors and ties. The use of the insulation piercing connectors and built in mounting clips (i.e., the hook structures) may allow a farmer the flexibility to quickly mount and place the light generating devices with only a screwdriver. However, other embodiments may also be possible.

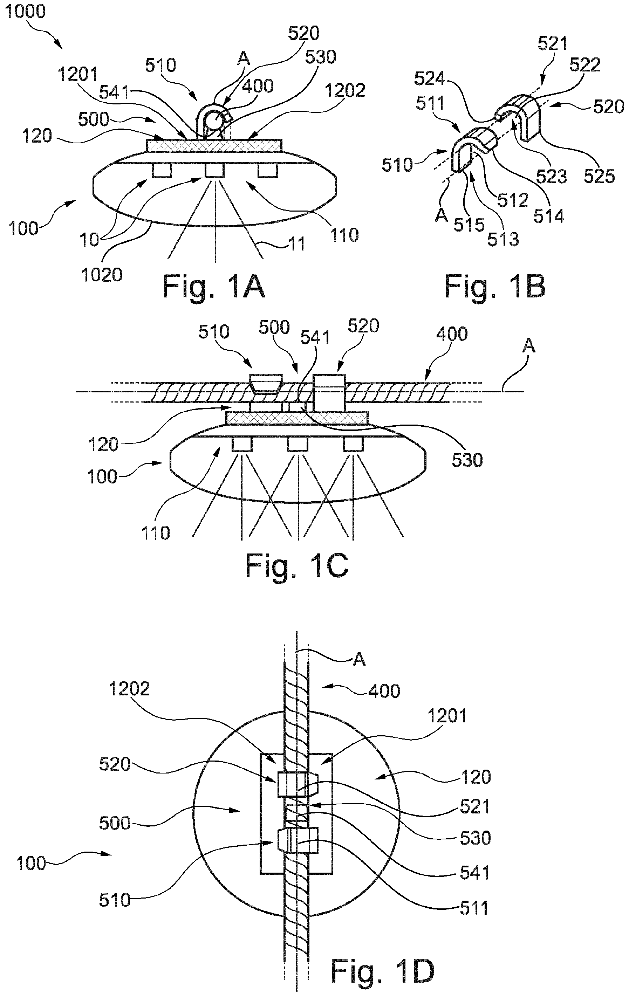

Fig. 1a schematically depicts an embodiment of the light generating system 1000, especially a cross-sectional view of the light generating system 1000 perpendicular to the main axis A. The light generating system 1000 comprises a light generating device 100 and connector configuration 500. The light generating device 100 comprises
(i) a light source 10, (ii) a first side 110, and (iii) a second side 120.

In embodiments, the light generating device 100 may be a closed element hosting the light source 10. Especially, the light generating device 100 may comprise a first part comprising the first side 120 and a second part comprising the second side 120. In embodiments, the first part may further comprise a light transmissive window 1020, especially transmissive for the light source light 10. The first side 110 (of a first part) may be associated to the second side 120 (of a second part), e.g. via screws and/or a click connection, or a screw-click connection, etc., i.e. means known in the art.

The light source 10 comprises a solid state light source. Especially, the light generating device 100 may be configured to generate light source light 11. Note that in embodiments, the light generating device 100 may comprise a plurality of light sources 10. The light generating device 100 is configured such that during operation of the light source 10, at least part of the light source light 11 emanates from the first side 110.

The connector configuration 500 is configured at the second side 120 of the light generating device 100. The connector configuration comprises a first hook structure 510, a second hook structure 520, and a support structure 530. The first hook structure 510 and the second hook structure 520 are depicted in Fig. 1b. These features are described below.

The first hook structure 510 comprises a first hook part 511 defining a first hook opening 512, a first hook opening access 513, and a first hook end 514. Analogously, the second hook structure 520 comprises a second hook part 521 defining a second hook opening 522, a second hook opening access 523, and a second hook end 524. In addition, the first hook structure 510 may in embodiments comprise a first hook base 515. Additionally, in embodiments, the second hook structure 520 may comprise a second hook base 525. In embodiments, the first hook base 515 and the second hook base 525 may be physically secured to the second side 120 of the light generating device 100.

Further, relative to a main axis A, the hook parts 511, 521 are at least partly configured at different sides of the main axis A, and the hook ends 514, 524 are configured at different sides of the main axis A. Note that, the term "sides of the main axis A" refer to a second side first part 1201 and a second side second part 1202 (wherein both the second side first part 1201 and the second side second part 1202 relate to parts on the second side of the light generating device). In the embodiment depicted, the second side first part 1201 and the second side second part 1202 are configured to the left side and the right side of the main axis A. Furthermore, in embodiments, the first hook end 514 may extend over the main axis A to the second side second part 1202. Similarly, the second hook end 524 may extend over the main axis A to the second side first part 1201. Further, the main axis A may pass through the first hook opening 512 and the second hook opening 522.

The support structure 530 comprises a support structure top part 541. The support structure top part 541 is configured between the first hook structure 510 and the second hook structure 520 (this is depicted in a cross-section parallel to the main axis A, see Fig. 1c).

The light generating device 100 is configured to be associated to a support cable 400 with the support cable 400 being configured (along the main axis A) through the hook openings 512, 522 and on the support structure top part 541. Especially, the support cable 400 may pass through the first hook opening 512 and the second hook opening 522. Furthermore, the support cable 400 may in embodiments pass over the support structure top part 541, especially the support cable 400 may contact the support structure top part 541. Especially, the support structure top part 541 may be displaced in a direction perpendicular to the main axis A (while aligning the support cable 400 along the main axis A). In further embodiments, the support structure top part 541 may be configured such that the main axis A passes over the support structure top part 541 such that the support structure top part 541 is displaced when aligning the support cable 400 along the main axis A. In yet further embodiments, the support structure top part 541 may be configured such that the main axis A passes through the support structure top part 541, thus the support structure top part 541 may have to be displaced to align the support cable 400 along the main axis A.

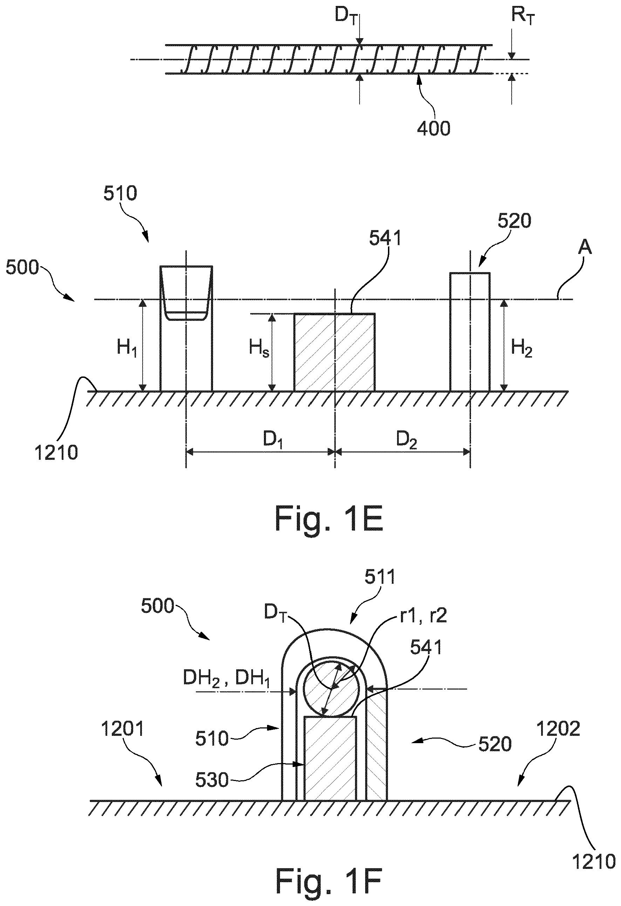

Note that the first hook opening 512, the second hook opening 522 and the support structure top part 541 may contact the support cable 400, thus providing a tight-fit. Here, first, the first hook structure 510 and the second hook structure 520 configured on opposite sides of the main axis A may clamp the support cable 400 (from the sides), and second, the support structure top part 541 and the hook openings (i.e. the first hook opening 512 and the second hook opening 522) may clamp the support cable 400 (from the top and the bottom). In embodiments, the connector configuration 500 may at least be partially flexible and hence a part of the connector configuration 500 (especially the support structure top part 541) may be displaced to accommodate the support cable 400. Additionally or alternatively, in embodiments, the support cable 400 may undergo partial deformation or bending when associated to the light generating device 100. Minimal tolerances between the support cable 400 and elements of the connector configuration 500 (i.e., the first hook structure 510, the second hook structure 520 and the support structure top part 541) may facilitate clamping the connector configuration 500 to the support cable 400. The physical dimensions of the aforementioned features are depicted in Fig. 1e and Fig. 1f.

The support structure top part 541 is configured to exert a force on the support cable 400. Especially, the support structure top part 541 may exert a force on the support cable 400 (when associated with the support cable 400). Hence, in this way, the support cable 400 may be clamped by the first hook structure 510, the second hook structure 520 and the support structure top part 541. Therefore, in embodiments, the light generating device 100 may be configured to be suspended from the support cable 400.

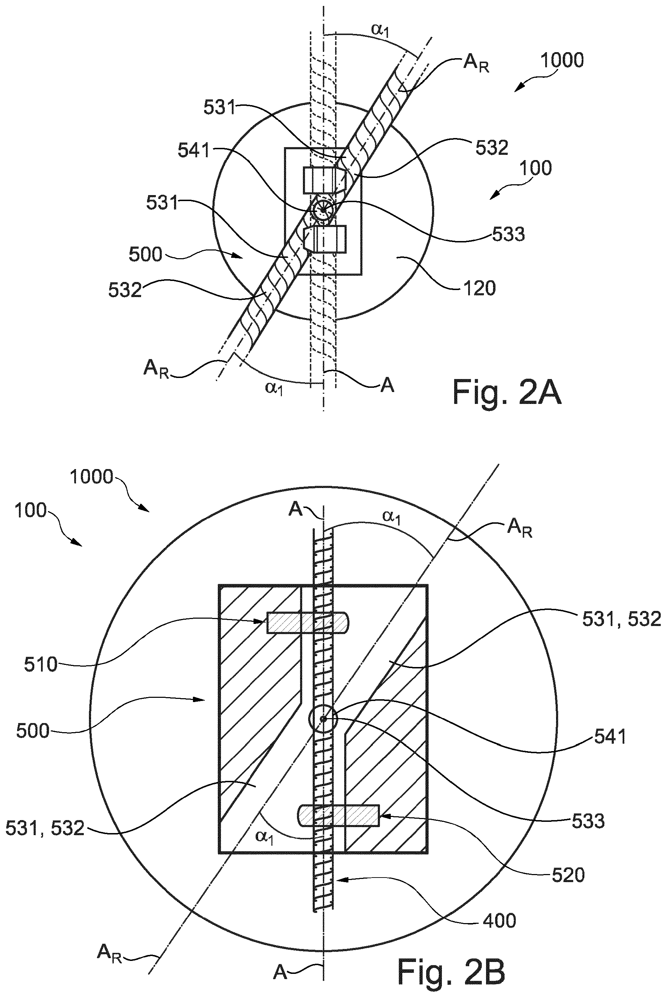

In embodiments, the support structure 530 may comprise a recess structure 531, especially the recess structure 531 may facilitate associating (or configuring) the support cable 400 to the light generating device 100. These features are described further in Fig. 2.

In embodiments, the support structure 530 may comprise a resilient material. The resilient material may be deformed by the application of mechanical stress and may exert a counter force proportional to the extent of deformation. Hence, in this way the support structure 530, especially the support structure top part 541 may exert a force on the support cable 400. Thus, clamping the light generating device 100 to the connector configuration 500.

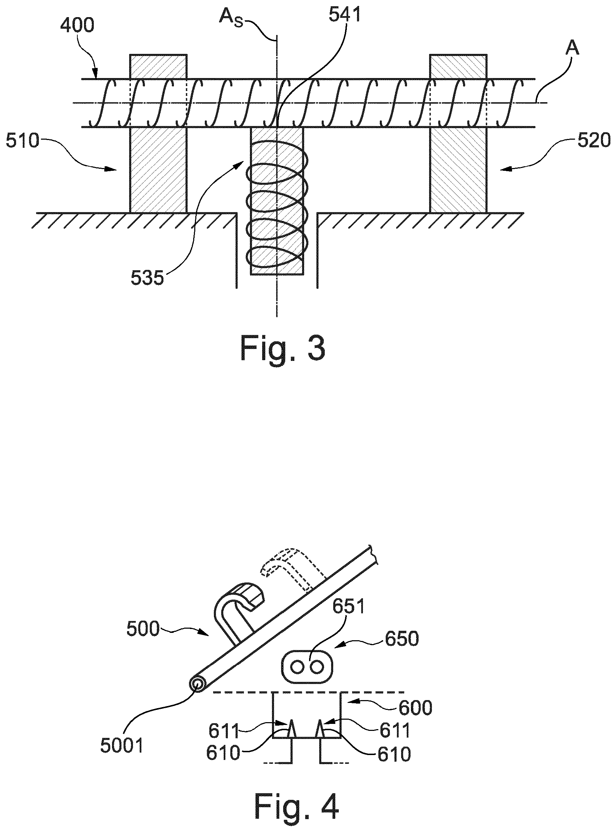

Additionally or alternatively, in embodiments, the support structure 530 may comprise a support element 535. Especially, the support element 535 may be movable or extendable along a support element axis A_{S} orthogonal to the main axis A (depicted in Fig. 3). In embodiments, the support element 535 may be configured to exert a force on the support cable 400. Especially, the support element 535 may comprise a resilient material or is spring-based. Hence, upon configuring the support cable 400 along the main axis A, the support structure top part 541 may be displaced along the support axis A_{S}. In response to the displacement of the support structure 530, especially the support structure top part 541, the support structure top part 541 exerts a (counter) force on the support cable 400.

In embodiments, the light generating device 100 may comprise a trench 600 for at least partly hosting a predefined electrical cable 650. The predefined electrical cable 650 may especially power (and/or control) the light generating device 100. The predefined electrical cable 650 may be configured in the trench 600. Especially, during assembly, the connector configuration 500 may be rotated about the connector hinge 5001 such that the trench 600 is accessible to the predefined electrical cable. These features are depicted in Fig. 4.

In embodiments, the total volume of the light generating device may be selected from the range of 1 cm³ - 10 dm³, such as selected from the range of 4 cm³ -4 dm³, though other dimensions may also be possible.

Fig. 1b schematically depicts the first hook structure 510 and the second hook structure 520 in embodiments. In embodiments, the first hook structure 510 may comprise the first hook base 515 physically secured to the second side 120 of the light generating device 100. Further, in embodiments, the second hook structure 520 may comprise the second hook base 525 physically secured to the second side 120 of the light generating device. Especially, the first hook opening access 513 may provide access to the first hook opening 512. Analogously, the second hook opening access 523 may provide access to the second hook opening 522.

In embodiments, the first hook structure 510 may have a shape selected from the group of an L-shape, a (disconnected) P-shape, a J-shape or a U-shape. For instance, in the embodiment a J-shape is depicted. Here, the first hook base 515 (and/or the second hook base 525) may especially be the top of the character "J", the curved part of the character "J" may especially be the first hook opening access 513 (and/or the second hook opening access 523), the curved region (at least partially) enclosed by the bottom curvature of the character "J" may define the first hook opening 512 (and/or the second hook opening 522), and the bottom extremity of the character "J" may especially be the first hook end 514 (and/or the second hook end 524). In other words, the first hook structure 510 (and/or the second hook structure 520) may in embodiments resemble the character "J", especially an inverted character "J" attached to the second side 120.

Fig. 1c schematically depicts an embodiment of the light generating system 1000 in a cross-section parallel to the main axis A. In the embodiment depicted, the light generating device 100 comprises three light sources 10. Especially, light source light 11 emanates from the first side 110. The connector configuration 500 is configured on the second side. In this cross-section, the support structure 530, the first hook structure 510 and the second hook structure 520, and the support structure top part 541 are depicted. In embodiments, the first hook structure 510 and the second hook structure 520 are configured along the main axis A and on either side of the support structure top part 541.

The top of the support cable 400 may be essentially the same at the position of the first hook structure 510, the support structure 530, and the second hook structure 520. However, due to the force of the support structure 530 on the support cable 400, the local top of the support cable 400 at the support structure 530 may e.g. be a bit higher, such as 1-20% of the equivalent circular diameter of the support cable, like 1-10%, than at the positions of the first hook structure 510 and the second hook structure 520.

Fig. 1d schematically depicts an overhead (top) view of the light generating system 1000. In the embodiment depicted, the connector configuration 500 comprising the support structure 530 is attached to the second side 120 of the light generating device. Further, in embodiment depicted, the support cable 400 is configured along the main axis A. Especially, the support cable 400 is configured in the first hook part 511 (especially via the first hook opening 512) and the second hook part 521 (especially via the second hook opening 522). Further, the support structure top part 541 is configured between the first hook structure 510 and the second hook structure 520.

Fig. 1e schematically depicts the connector configuration 500 in embodiments.

The depicted embodiment illustrates the connector configuration 500 comprising the first hook structure 510, the second hook structure 520, and the support structure top part 541 (configured at the second side 120 of the light generating device 100).

In embodiments, the center of the support structure top part 541 part may be configured at a distance D₁ from the center of the first hook opening 512 measured along the main axis A. Further, in embodiments, the center of the support structure top part 541 may be configured at a distance D₂ from the center of the second hook opening 522 measured along the main axis A. In embodiments, it may apply that D₁ = D₂.

Further, in embodiments, the second side may comprise a second side plane 1210 passing through at least a part of the second side 120. Especially, the second side plane 1210 may be flat. Further, in embodiments, the center of the first hook opening 512 may be configured at a distance H₁ measured perpendicular and relative to the second side plane 1210, and the center of the second hook opening 522 may be configured at a distance H₂ measured perpendicular and relative to the second side plane 1210. In embodiments H₁ may be equal to H₂. Further, in embodiments, the support cable 400 may have an equivalent circular diameter of D_{T} and equivalent circular radius of R_{T}. Note that the support cable 400 may especially pass through the first hook opening 512 and the second hook opening 522. Further, the support cable 400 may pass through the first hook opening 512 and the second hook opening 522, and may be in contact with the support structure top part 541. In such a configuration, one or more of the following may apply: (i) the support structure top part 541, the first hook structure 510 and the second hook structure 520 may be partially deformed to accommodate the support cable 400, (ii) the support cable 400 may be partially deformed (or bent) to be accommodated by the connector configuration 500, and (iii) the support structure top part 541 may be displaced in a direction perpendicular to the main axis A and may exert a force on the support cable 400. Hence, it may further apply that, in embodiments H₁-R_{T} ≤ H_{S}, and analogously, in embodiments, it may apply that H₂-R_{T} ≤ H_{S}.

The connector configuration 500 is depicted without the support cable 400 for clarity. The support cable 400 is depicted above the connector configuration 500 to indicate the relevant dimensions of the support cable 400.

Fig. 1f schematically depicts the connector configuration 500 and the support cable 400 in a direction perpendicular to the main axis A. In Fig. 1f, the diameter DT is schematically depicted as well as a first radius r1 comprised by the first hook part 511. As a second radius r2 comprised by the second hook part may be essentially the same, also the second radius is indicated. Note that the radius of the support cable and the first radius and the second radius may in embodiments essentially be the same.

In the figure, the first hook structure 510 and a part of the second hook structure 520 (configured behind the first hook structure 510 in this view) are depicted. The first hook opening 512 may in embodiments have an equivalent circular diameter DH₁ and the second hook opening 522 may in embodiments have an equivalent circular diameter DH₂. Further, in embodiments, there may be minimal tolerances between the first hook opening 512 and the support cable 400. Analogously, there may be minimal tolerances between the second hook opening 522 and the support cable 400.

Hence, in embodiments, it may apply that D_{T} ≤ DH₁, and analogously, in embodiments, it may apply that D_{T} ≤ DH₂.

Fig. 2 schematically depicts the recess structure 531 in embodiments. Fig. 2a depicts an overhead view of an embodiment of the light generating device 100. In the depicted embodiment, the support cable 400 is first aligned along the recess axis A_{R}. Following which, the light generating device 100 is rotated to align the support cable 400 to the main axis A.

As mentioned above, in embodiments, the support structure 530 comprises a recess structure 531. Especially, the recess structure 531 may be configured along at least part of the main axis A. The recess structure 531 may especially facilitate arranging (or configuring) the support cable 400 along the main axis A. Especially, the recess structure 531 may comprise a channel or conduit to facilitate sliding (or arranging) the support cable 400 along the main axis A. More especially, the sides of the recess structure 531 i.e., the sides of the channel or conduit may be sloping or inclined. This may facilitate sliding the support cable 400 into the recess structure 531.

Fig. 2b depicts an embodiment of the light generating device 100 comprising a recess structure 531 further comprising a saddle form-like shape. **In** further embodiments, the recess structure 531 may comprise a saddle form-like shape. Especially, the saddle form-like shape may have a valley that is bounded on either side by raised structures (or ridges). The dashed lines indicate the raised regions of the recess structure 531. This may provide the benefit facilitating the sliding of the support cable 400 into the recess structure 531 and preventing the support cable 400 from slipping out of the recess structure 531. In yet further embodiments, the recess structure 531 may comprise two recess parts 532 configured at both sides of a central recess point 533. In embodiments, the support element axis A_{S} may pass through the central recess point 533. The recess parts 532 may especially broaden away from the central recess point 533. Especially, the recess parts 532 may have recess axes A_{R}. In embodiments, the recess axes A_{R} may each have a mutual first angle α1 with the main axis A selected from the range of 0<α1≤90°. Hence, in this way, the support cable 400 may first be aligned along the recess axis A_{R} and subsequently the light generating device 100 may be rotated about the support element axis As to align the support cable 400 with the main axis A. This may provide the benefit of configuring the support cable 400 along the main axis A without the obstruction by the first support structure 510 and the second support structure 520.

Fig. 3 schematically depicts the support element 535 in embodiments. As mentioned above, the support structure 530 may comprise a resilient material. In further embodiments, the support structure 530 may comprise a support element 535. Especially, the support element 535 may be movable or extendable along the support element axis A_{S} which may be orthogonal to the main axis A. In embodiments, the support element 535 may be configured to exert a force on the support cable 400. Furthermore, in embodiments, the support element 535 may comprise a resilient material or is spring-based.

In the embodiment depicted, the support cable 400 passes through the first hook opening 512 and the second hook opening 522. Especially, the support element 535 is spring based and may exert a force on the support cable 400. Hence, in this way, the support cable 400 may be clamped between the first hook structure 510, the second hook structure 520 and the support structure top part 541. Especially, the connector configuration 500 may provide a tight-fit i.e., support cable 400 may especially contact the inner sides of the first hook opening and the second hook opening, and the support structure top part 541.

Fig. 4 schematically depicts the trench 600 in embodiments. In embodiments, the light generating device 100 may comprise a trench 600 for at least partly hosting a predefined electrical cable 650. Note that in embodiments, the trench 600 is different from the recess structure 531. In embodiments, the trench 600 may be configured on the second side 120 closer to the first side 110 (than the recess structure 531). Hence, in embodiments, the trench 600 may be configured below the recess structure 531. However, in embodiments, the trench 600 may also be configured at a different location than the recess structure 531.

Further, during the assembly of the light generating device 100, the connector configuration 500 may especially be configured in a partly removed configuration. Especially, the connector configuration 500 may be rotated about the connector hinge 5001 (to configure the connector configuration 500 in the removed configuration). In this way, the trench 600 may be accessible to the predefined electrical cable 650 in the removed configuration. Subsequently, during the assembly of the light generating device 100, the predefined electric cable 650 may be configured in the trench 600. Following which, the assembly may be completed by rotating the connector configuration 650 about the connector hinge 5001 back to its original position.

In embodiments, the trench 600 may comprise an electrically conducting element 610 comprising a sharp shape 611. Further, in embodiments, the predefined electrical cable 650 may comprise an isolator shell 651. The isolator shell 651 may especially insulate the predefined electrical cable 650. In embodiments, the electrically conducting element 610 (comprising the sharp shape 611) may be configured to penetrate the isolator shell 651 of the predefined electrical cable 650. That is, in the removed configuration, the predefined electrical cable 650 (comprising the isolator shell 651) may especially be hosted in the trench 600. Furthermore, in embodiments, the electrically conducting element 610 may pierce the isolator shell 651 to make (electrical) contact with the predefined electrical cable 650. Hence, in this way, the electrically conducting element 610 may be functionally coupled to the light generating device 100. In embodiments, the predefined electrical cable 650 may power the light generating device 100. Additionally or alternatively, in embodiments, the electrical contact may facilitate controlling the light generating device 100 by means of a controller or a driver.

In the embodiment, the predefined electrical cable 650 may comprise two electrical cables. This may facilitate configuring the light generating device 100 in a parallel configuration to the power source. Furthermore, in embodiments, the trench 600 may comprise at least two electrically conducting elements 610. The two electrically conducting elements 610 may in embodiments (each) comprise a sharp shape 611. Further, in embodiments, the electrically conducting elements 610 may both pierce the isolator shell 651. In further embodiments, the two electrically conducting elements 610 may be configured functionally coupled to two different electrodes of the light source 10. Thus, the light source 10 may be configured in a parallel configuration to the power supply.

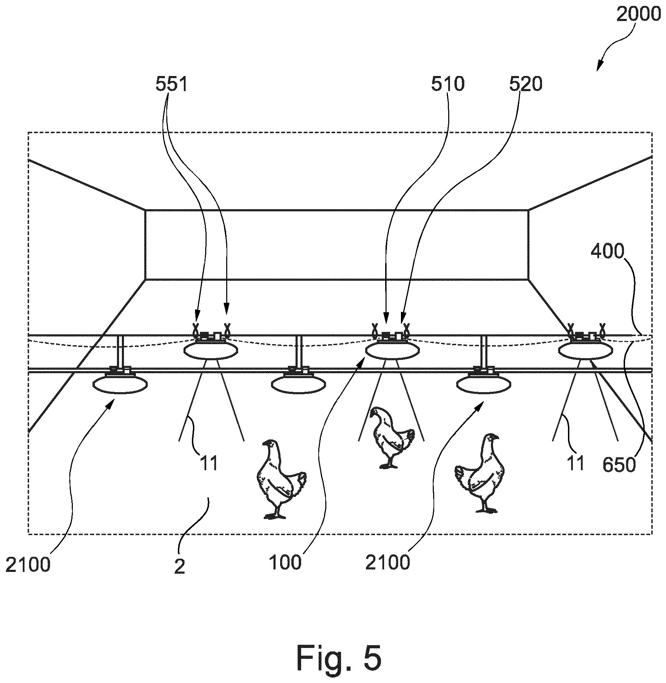

Fig 5 schematically depicts an embodiment of the animal arrangement 2000. In a further aspect, the invention provides an animal arrangement 2000 comprising an animal area 2 and the light generating system 1000. Especially, light source light 11 may be used to illuminate the animal area 2. In embodiments, the animal area 2 may be an area where animals may be hosted or housed. In further embodiments, the light generating system 1000 may comprise a plurality of light generating devices 100 and the connector configuration 500. That is, the light generating system 1000 may comprise a plurality of light generating devices 100, wherein the (each) light generating device may comprise the connector configuration 500. In embodiments, the support cable 400 may be configured over the animal area 2. Especially, the support cable 400 may be configured to support the plurality of light generating devices 100 by the (respective) connector configurations 500. Note that in embodiments, the animal area may have a plurality of support cables 400, wherein each support cable 400 may support a plurality of light generating devices 100. Hence, a plurality of light generating devices 100 may be associated to the said support cables 400 and thus illuminate the animal area 2. Further, in embodiments, the (each) light generating device may be functionally coupled to the predefined electrical cable 650. In the embodiment depicted, the predefined electrical cable 650 may be configured in the trench 600. Outside the trench, the predefined electrical cable may be secured to the support cable 400 by means of clamps 551 (for example: zip ties, clips, ties, etc).

In embodiments, the animal arrangement may further comprise an (elongated) feed line 2100. Especially, a feed and a liquid may be flowed via the feed line 2100. In embodiments, the feed line 2100 may be configured to provide one or more of the liquid and the feed (at different locations in the animal arrangement 2000). In embodiments, the light generating system 1000 may be configured to provide light source light 11 to one or more of the feed line 2100 and at least part of the animal area 2 configured below the feed line 2100.

In further embodiments, the support cable 400 may comprise an electrically conductive material. In such embodiments, the support cable 400 may especially provide a charge when contacted by a conductive material, especially an animal. Hence, in embodiments, the support cable 400 may be configured as shock wire.

## Claims

1. A light generating system (1000) comprising a light generating device (100) and a connector configuration (500), wherein:
- the light generating device (100) comprises (i) a light source (10), (ii) a first side (110), and (iii) a second side (120);
- the light source (10) comprises a solid state light source and is configured to generate light source light (11), wherein the light generating device (100) is configured such that during operation of the light source (10), at least part of the light source light (11) emanates from the first side (110);
- the connector configuration (500) is configured at the second side (120) of the light generating device (100), and comprises a first hook structure (510), a second hook structure (520), and a support structure (530);
- the first hook structure (510) comprises a first hook part (511) defining a first hook opening (512), a first hook opening access (513), and a first hook end (514), wherein the second hook structure (520) comprises a second hook part (521) defining a second hook opening (522), a second hook opening access (523), and a second hook end (524), wherein relative to a main axis (A), the hook parts (521) are at least partly configured at different sides of the main axis (A), and the hook ends (514,524) are configured at different sides of the main axis (A);
- the support structure (530) comprises a support structure top part (541), wherein the support structure (530) is configured between the first hook structure (510) and the second hook structure (520); and
- the light generating device (100) is configured to be associated to a support cable (400) with the support cable (400) being configured through the hook openings (512,522) and on the support structure top part (541), wherein the support structure top part (541) is configured to exert a force on the support cable (400) when the light generating device (100) is associated to the support cable (400).

2. The light generating system (1000) according to claim 1, wherein the support structure (530) comprises a recess structure (531) along at least part of the main axis (A).

3. The light generating system (1000) according to claim 2, wherein the recess structure (531) comprises a saddle form-like shape.

4. The light generating system (1000) according to any one of the preceding claims 2-3, wherein the recess structure (531) comprises two recess parts (532), configured at both sides of a central recess point (533), wherein the recess parts (532) broaden in a direction away from the central recess point (533), wherein the recess parts (532) have recess axes (A_{R}), wherein the recess axes (A_{R}) each have a mutual first angle (α1) with the main axis (A) selected from the range of 0<α1≤90°.

5. The light generating system (1000) according to any one of the preceding claims, wherein the support structure (530) comprises a resilient material.

6. The light generating system (1000) according to any one of the preceding claims, wherein the support structure (530) comprises a support element (535), wherein the support element (535) is movable or extendable along a support element axis (A_{S}) which is orthogonal to the main axis (A), wherein the support element (535) is configured to exert a force on the support cable (400) when the light generating device (100) is associated to the support cable (400).

7. The light generating system (1000) according to claim 6, wherein the support element (535) comprises a resilient material and/or wherein the support element (535) is spring-based.

8. The light generating system (1000) according to any one of the preceding claims, wherein the light generating device (100) comprises a trench (600) for at least partly hosting a predefined electrical cable (650).

9. The light generating system (1000) according to claim 8, wherein the trench (600) comprises an electrically conducting element (610) comprising a sharp shape (611), wherein the electrically conducting element (610) is configured to penetrate an isolator shell (651) of the predefined electrical cable (650) when the trench (600) is hosting such predefined electrical cable (650) comprising the isolator shell (651), wherein the electrically conducting element (610) is functionally coupled to the light generating device (100).

10. The light generating system (1000) according to any one of the preceding claims 8-9, comprising at least two electrically conducting elements (610), of which two are configured functionally coupled to two different electrodes of the light source (10).

11. The light generating system (1000) according to any one of the preceding claims 8-10, wherein the connector configuration (500) is configured at least partially removable from the light generating device (100), wherein the connector configuration (500) is configured such that: (i) in an at least partly removed configuration, and in the absence of the predefined electrical cable (650), the trench (600) is accessible to the electrical cable (650), and (ii) when configuring the connector configuration (500) in a functional coupling to the light generating device (100), the electrically conducting element (610) is forced through the isolator shell (651).

12. An animal arrangement (2000) comprising an animal area (2) and the light generating system (1000) according to any one of the preceding claims, wherein:
- the light generating system (1000) comprises a plurality of light generating devices (100) and connector configuration (500);
- the support cable (400) is configured over the animal area (2), wherein the support cable (400) is configured to support the plurality of light generating devices (100) by the connector configurations (500);
- the light generating device (100) is functionally coupled to a source of electrical energy via the predefined electrical cable (650) hosted in the trench of the light generating system as defined in any one of the preceding claims 8-11.

13. The animal arrangement (2000) according to claim 12, further comprising a feed line (2100), wherein the feed line (2100) is configured to provide one or more of liquid and feed, wherein the light generating system (1000) is configured to provide light source light (11) to one or more of the feed line (2100) and at least part of the animal area (2) configured below the feed line (2100).

14. The animal arrangement (2000) according to any one of the preceding claims 12-13, wherein the support cable (400) is configured as shock wire.

15. A method for illuminating at least part of the animal arrangement (2000) according to any one of the preceding claims 12-13, wherein the method comprises providing the animal arrangement of any of the preceding claims 12-13, and providing the light source light (11).

## Patentansprüche

1. Lichterzeugungssystem (1000), umfassend eine erste Lichterzeugungsvorrichtung (100) und eine Verbinderkonfiguration (500), wobei:
- die Lichterzeugungsvorrichtung (100) (i) eine Lichtquelle (10), (ii) eine erste Seite (110) und (iii) eine zweite Seite (120) umfasst;
- die Lichtquelle (10) eine Festkörperlichtquelle umfasst und konfiguriert ist, um Lichtquellenlicht (11) zu erzeugen, wobei die Lichterzeugungsvorrichtung (100) derart konfiguriert ist, dass während eines Betriebs der Lichtquelle (10) mindestens ein Teil des Lichtquellenlichts (11) von der ersten Seite (110) ausgeht;
- die Verbinderkonfiguration (500) an der zweiten Seite (120) der Lichterzeugungsvorrichtung (100) konfiguriert ist und eine erste Hakenstruktur (510), eine zweite Hakenstruktur (520) und eine Stützstruktur (530) umfasst;
- die erste Hakenstruktur (510) ein erstes Hakenteil (511) umfasst, das eine erste Hakenöffnung (512), einen ersten Hakenöffnungszugang (513) und ein erstes Hakenende (514) definiert, wobei die zweite Hakenstruktur (520) ein zweites Hakenteil (521) umfasst, das eine zweite Hakenöffnung (522), einen zweiten Hakenöffnungszugang (523) und ein zweites Hakenende (524) definiert, wobei relativ zu einer Hauptachse (A) die Hakenteile (521) mindestens teilweise auf unterschiedlichen Seiten der Hauptachse (A) konfiguriert sind und die Hakenenden (514, 524) auf unterschiedlichen Seiten der Hauptachse (A) konfiguriert sind;
- die Stützstruktur (530) ein Stützstrukturoberteil (541) umfasst, wobei die Stützstruktur (530) zwischen der ersten Hakenstruktur (510) und der zweiten Hakenstruktur (520) konfiguriert ist; und
- die Lichterzeugungsvorrichtung (100) konfiguriert ist, um einem Stützkabel (400) zugeordnet zu werden, wobei das Stützkabel (400) durch die Hakenöffnungen (512, 522) und auf dem Stützstrukturoberteil (541) konfiguriert ist, wobei das Stützstrukturoberteil (541) konfiguriert ist, um eine Kraft auf das Stützkabel (400) auszuüben, wenn die Lichterzeugungsvorrichtung (100) dem Stützkabel (400) zugeordnet ist.

2. Lichterzeugungssystem (1000) nach Anspruch 1, wobei die Stützstruktur (530) eine Aussparungsstruktur (531) entlang mindestens eines Teils der Hauptachse (A) umfasst.

3. Lichterzeugungssystem (1000) nach Anspruch 2, wobei die Aussparungsstruktur (531) eine sattelformartige Gestalt umfasst.

4. Lichterzeugungssystem (1000) nach einem der vorstehenden Ansprüche 2 bis 3, wobei die Aussparungsstruktur (531) zwei Aussparungsteile (532) umfasst, die auf beiden Seiten eines zentralen Aussparungspunkts (533) konfiguriert sind, wobei sich die Aussparungsteile (532) in einer Richtung weg von dem zentralen Aussparungspunkt (533) verbreitern, wobei die Aussparungsteile (532) Aussparungsachsen (A_{R}) aufweisen, wobei die Aussparungsachsen (A_{R}) jeweils einen gemeinsamen ersten Winkel (α1) mit der Hauptachse (A) aufweisen, der aus dem Bereich von 0<α1≤90° ausgewählt ist.

5. Lichterzeugungssystem (1000) nach einem der vorstehenden Ansprüche, wobei die Stützstruktur (530) ein elastisches Material umfasst.

6. Lichterzeugungssystem (1000) nach einem der vorstehenden Ansprüche, wobei die Stützstruktur (530) ein Stützelement (535) umfasst, wobei das Stützelement (535) entlang einer Stützelementachse (A_{S}) bewegbar oder ausfahrbar ist, die orthogonal zu der Hauptachse (A) verläuft, wobei das Stützelement (535) konfiguriert ist, um eine Kraft auf das Stützkabel (400) auszuüben, wenn die Lichterzeugungsvorrichtung (100) dem Stützkabel (400) zugeordnet ist.

7. Lichterzeugungssystem (1000) nach Anspruch 6, wobei das Stützelement (535) ein elastisches Material umfasst und/oder wobei das Stützelement (535) federbasiert ist.

8. Lichterzeugungssystem (1000) nach einem der vorstehenden Ansprüche, wobei die Lichterzeugungsvorrichtung (100) einen Graben (600) für ein mindestens teilweises Aufnehmen eines vordefinierten elektrischen Kabels (650) umfasst.

9. Lichterzeugungssystem (1000) nach Anspruch 8, wobei der Graben (600) ein elektrisch leitendes Element (610) umfasst, umfassend eine scharfe Gestalt (611), wobei das elektrisch leitende Element (610) konfiguriert ist, um eine Isolatorhülle (651) des vordefinierten elektrischen Kabels (650) zu durchdringen, wenn der Graben (600) ein solches vordefiniertes elektrisches Kabel (650) aufnimmt, umfassend die Isolatorhülle (651), wobei das elektrisch leitende Element (610) an die Lichterzeugungsvorrichtung (100) funktionell gekoppelt ist.

10. Lichterzeugungssystem (1000) nach einem der vorstehenden Ansprüche 8 bis 9, umfassend mindestens zwei elektrisch leitende Elemente (610), von denen zwei an zwei unterschiedliche Elektroden der Lichtquelle (10) funktionell gekoppelt konfiguriert sind.

11. Lichterzeugungssystem (1000) nach einem der vorstehenden Ansprüche 8 bis 10, wobei die Verbinderkonfiguration (500) mindestens teilweise von der Lichterzeugungsvorrichtung (100) entfernbar konfiguriert ist, wobei die Verbinderkonfiguration (500) derart konfiguriert ist, dass: (i) in einer mindestens teilweise entfernten Konfiguration und in der Abwesenheit des vordefinierten elektrischen Kabels (650) der Graben (600) für das elektrische Kabel (650) zugänglich ist, und (ii) bei dem Konfigurieren der Verbinderkonfiguration (500) in einer funktionellen Kopplung mit der Lichterzeugungsvorrichtung (100), das elektrisch leitende Element (610) durch die Isolatorhülle (651) gedrängt wird.

12. Tieranordnung (2000), umfassend einen Tierbereich (2) und das Lichterzeugungssystem (1000) nach einem der vorstehenden Ansprüche, wobei:
- das Lichterzeugungssystem (1000) eine Vielzahl von Lichterzeugungsvorrichtungen (100) und eine Verbinderkonfiguration (500) umfasst;
- das Stützkabel (400) über dem Tierbereich (2) konfiguriert ist, wobei das Stützkabel (400) konfiguriert ist, um die Vielzahl von Lichterzeugungsvorrichtungen (100) durch die Verbinderkonfigurationen (500) zu stützen;
- die Lichterzeugungsvorrichtung (100) über das vordefinierte elektrische Kabel (650), das in dem Graben des Lichterzeugungssystems nach einem der vorstehenden Ansprüche 8 bis 11 aufgenommen ist, an eine elektrische Energiequelle funktionell gekoppelt ist.

13. Tieranordnung (2000) nach Anspruch 12, ferner umfassend eine Futterleitung (2100), wobei die Futterleitung (2100) konfiguriert ist, um eines oder mehreres von Flüssigkeit und Futter bereitzustellen, wobei das Lichterzeugungssystem (1000) konfiguriert ist, um Lichtquellenlicht (11) an eines oder mehreres von der Futterleitung (2100) und mindestens einen Teil des Tierbereichs (2), der unterhalb der Futterleitung (2100) konfiguriert ist, bereitzustellen.

14. Tieranordnung (2000) nach einem der vorstehenden Ansprüche 12 bis 13, wobei das Stützkabel (400) als Schockdraht konfiguriert ist.

15. Verfahren zum Beleuchten mindestens eines Teils der Tieranordnung (2000) nach einem der vorstehenden Ansprüche 12 bis 13, wobei das Verfahren das Bereitstellen der Tieranordnung nach einem der vorstehenden Ansprüche 12 bis 13 und das Bereitstellen des Lichtquellenlichts (11) umfasst.

## Revendications

1. Système générateur de lumière (1000) comprenant un dispositif générateur de lumière (100) et une configuration de connecteur (500), dans lequel :
- le dispositif générateur de lumière (100) comprend (i) une source de lumière (10), (ii) un premier côté (110) et (iii) un second côté (120) ;
- la source de lumière (10) comprend une source de lumière à semiconducteurs et est configurée pour générer de la lumière de source de lumière (11), dans lequel le dispositif générateur de lumière (100) est configuré de telle sorte que pendant le fonctionnement de la source de lumière (10), au moins une partie de la lumière de source de lumière (11) émane du premier côté (110) ;
- la configuration de connecteur (500) est conçue au niveau du second côté (120) du dispositif générateur de lumière (100), et comprend une première structure de crochet (510), une seconde structure de crochet (520) et une structure de support (530) ;
- la première structure de crochet (510) comprend une première partie de crochet (511) définissant une première ouverture de crochet (512), un premier accès d'ouverture de crochet (513) et une première extrémité de crochet (514), dans lequel la seconde structure de crochet (520) comprend une seconde partie de crochet (521) définissant une seconde ouverture de crochet (522), un second accès d'ouverture de crochet (523) et une seconde extrémité de crochet (524), dans lequel par rapport à un axe principal (A), les parties de crochet (521) sont au moins partiellement conçues au niveau de côtés différents de l'axe principal (A), et les extrémités de crochet (514, 524) sont conçues au niveau de côtés différents de l'axe principal (A) ;
- la structure de support (530) comprend une partie supérieure de structure de support (541), dans lequel la structure de support (530) est conçue entre la première structure de crochet (510) et la seconde structure de crochet (520) ; et
- le dispositif générateur de lumière (100) est conçu pour être associé à un câble de support (400) avec le câble de support (400) étant conçu à travers les
ouvertures de crochet (512, 522) et sur la partie supérieure de structure de support (541), dans lequel la partie supérieure de structure de support (541) est conçue pour exercer une force sur le câble de support (400) lorsque le dispositif générateur de lumière (100) est associé au câble de support (400).

2. Système générateur de lumière (1000) selon la revendication 1, dans lequel la structure de support (530) comprend une structure d'évidement (531) le long d'au moins une partie de l'axe principal (A).

3. Système générateur de lumière (1000) selon la revendication 2, dans lequel la structure d'évidement (531) comprend un profil en forme de selle.

4. Système générateur de lumière (1000) selon l'une quelconque des revendications 2 à 3 précédentes, dans lequel la structure d'évidement (531) comprend deux parties d'évidement (532), conçues au niveau de l'un et l'autre des côtés d'un point d'évidement central (533), dans lequel les parties d'évidement (532) s'élargissent dans une direction à l'écart du point d'évidement central (533), dans lequel les parties d'évidement (532) ont des axes d'évidement (A_{R}), dans lequel les axes d'évidement (A_{R}) ont chacun un premier angle mutuel (α1) avec l'axe principal (A) sélectionné dans la plage de 0<α1≤90°.

5. Système générateur de lumière (1000) selon l'une quelconque des revendications précédentes, dans lequel la structure de support (530) comprend un matériau élastique.

6. Système générateur de lumière (1000) selon l'une quelconque des revendications précédentes, dans lequel la structure de support (530) comprend un élément de support (535), dans lequel l'élément de support (535) est déplaçable ou extensible le long d'un axe d'élément de support (Aₛ) qui est orthogonal à l'axe principal (A), dans lequel l'élément de support (535) est conçu pour exercer une force sur le câble de support (400) lorsque le dispositif générateur de lumière (100) est associé au câble de support (400).

7. Système générateur de lumière (1000) selon la revendication 6, dans lequel l'élément de support (535) comprend un matériau élastique et/ou dans lequel l'élément de support (535) est sollicité par ressort.

8. Système générateur de lumière (1000) selon l'une quelconque des revendications précédentes, dans lequel le dispositif générateur de lumière (100) comprend une tranchée (600) permettant d'accueillir au moins partiellement un câble électrique prédéfini (650).

9. Système générateur de lumière (1000) selon la revendication 8, dans lequel la tranchée (600) comprend un élément électriquement conducteur (610) comprenant une forme effilée (611), dans lequel l'élément électriquement conducteur (610) est conçu pour pénétrer dans une enveloppe isolante (651) du câble électrique prédéfini (650) lorsque la tranchée (600) accueille un tel câble électrique prédéfini (650) comprenant l'enveloppe isolante (651), dans lequel l'élément électriquement conducteur (610) est fonctionnellement couplé au dispositif générateur de lumière (100).

10. Système générateur de lumière (1000) selon l'une quelconque des revendications 8 à 9 précédentes, comprenant au moins deux éléments électriquement conducteurs (610), dont deux sont conçus couplés fonctionnellement à deux électrodes différentes de la source de lumière (10).

11. Système générateur de lumière (1000) selon l'une quelconque des revendications 8 à 10 précédentes, dans lequel la configuration de connecteur (500) est conçue au moins partiellement amovible du dispositif générateur de lumière (100), dans lequel la configuration de connecteur (500) est conçue de telle sorte que : (i) dans une configuration au moins partiellement retirée, et en l'absence du câble électrique prédéfini (650), la tranchée (600) est accessible au câble électrique (650), et (ii) lorsque l'on configure la configuration de connecteur (500) dans un couplage fonctionnel avec le dispositif générateur de lumière (100), l'élément électriquement conducteur (610) est forcé à travers l'enveloppe isolante (651).

12. Agencement pour animaux (2000) comprenant une zone pour animaux (2) et le système générateur de lumière (1000) selon l'une quelconque des revendications précédentes, dans lequel :
- le système générateur de lumière (1000) comprend une pluralité de dispositifs générateurs de lumière (100) et une configuration de connecteur (500) ;
- le câble de support (400) est conçu par-dessus la zone pour animaux (2), dans lequel le câble de support (400) est conçu pour supporter la pluralité de dispositifs générateurs de lumière (100) par la configuration de connecteur (500) ;
- le dispositif générateur de lumière (100) est fonctionnellement couplé à une source d'énergie électrique par l'intermédiaire du câble électrique prédéfini (650) accueilli dans la tranchée du système générateur de lumière tel que défini dans l'une quelconque des revendications 8 à 11 précédentes.

13. Agencement pour animaux (2000) selon la revendication 12, comprenant en outre une ligne d'alimentation (2100), dans lequel la ligne d'alimentation (2100) est conçue pour fournir un ou plusieurs parmi un liquide et une alimentation, dans lequel le système générateur de lumière (1000) est configuré pour fournir de la lumière de source de lumière (11) à une ou plusieurs parmi la ligne d'alimentation (2100) et au moins une partie de la zone pour animaux (2) conçue en dessous de la ligne d'alimentation (2100).

14. Agencement pour animaux (2000) selon l'une quelconque des revendications 12 à 13 précédentes, dans lequel le câble de support (400) est conçu en tant que fil électrifié.

15. Procédé permettant d'illuminer au moins une partie de l'agencement pour animaux (2000) selon l'une quelconque des revendications 12 à 13 précédentes, dans lequel le procédé comprend la fourniture de l'agencement pour animaux selon l'une quelconque des revendications 12 à 13 précédentes, et la fourniture de la lumière de source de lumière (11).
